# DEMANDE DE BREVET EUROPEEN

(11) **EP 2 860 046 A1**
(43) Date de publication de la demande: **15.04.2015**
(21) Numéro de dépôt: 14188318.1
(22) Date de dépôt: 09.10.2014
(51) Int. Cl.: B60B 37/10, A61G 5/10, B60B 27/02, F16B 7/14

(54) **Dispositif universel de solidarisation réversible à un châssis d'une roue amovible**

(30) Priorité: 09.10.2013 FR 1359820
(71) Demandeur: Assistance Publique - Hôpitaux De Paris, 75475 Paris Cedex 10 (FR)
(72) Inventeur: Pradon, Didier, 92430 Marnes-La-Coquette (FR)
(74) Mandataire: Vidon Brevets & Stratégie

(57) **Abrégé**

L'invention concerne un dispositif de solidarisation à un châssis (19), notamment de fauteuil roulant, d'une roue amovible comprenant un moyeu (17) mobile en rotation autour d'un axe (1), ledit châssis (19) comprenant un logement (18) à l'intérieur duquel au moins une partie dudit axe (1) est destinée à être logée.

Selon invention, un tel dispositif comprend des moyens de modification (10, 11, 101, 111) du périmètre du contour extérieur dudit axe (1).

## Description

### 1. Domaine de l'invention

Le domaine de l'invention est celui de la conception et de la fabrication des dispositifs permettant d'assurer une solidarisation de manière réversible d'une roue à un châssis.

Plus précisément, l'invention concerne tout particulièrement de tels dispositifs mis en oeuvre pour solidariser de manière réversible une roue au châssis d'un fauteuil roulant.

### 2. Art antérieur

Les fauteuils roulants, ou chaises roulantes, sont couramment utilisés pour permettre à des personnes à mobilité réduite de se déplacer ou d'être déplacées.

Un fauteuil roulant comprend classiquement un châssis, pliable ou non, portant un siège destiné à recevoir une personne. Ce châssis repose généralement sur deux roues arrière de grand diamètre et deux roues avant directionnelles de plus petit diamètre.

Ces fauteuils roulants peuvent être du type à propulsion manuelle. Dans ce cas, chaque roue arrière est munie d'un cerceau sur lequel la personne assise dans le fauteuil peut agir pour entrainer les roues en rotation afin de mettre en mouvement le fauteuil.

Ces fauteuils peuvent également être du type à propulsion motorisée. Dans ce cas, un moteur électrique est susceptible d'entrainer en rotation chaque roue arrière, et un organe de commande, comme un manche à balai (« joystick » en langue anglaise) pouvant être actionné par la personne assise dans le fauteuil roulant afin de manoeuvrer celui-ci.

Pour faciliter le démontage des roues arrière, certains fauteuils roulants sont équipés de moyens de solidarisation rapide des roues au châssis.

La demande de brevet portant le numéro EP-A1-0 943 463 décrit un tel dispositif de solidarisation rapide.

Selon la technique décrite dans ce document, la roue comprend classiquement un moyeu monté mobile en rotation autour d'un axe. L'extrémité de cet axe est prévue pour être insérée dans le montant (ou canon) d'un châssis. L'axe est creux et présente à son extrémité des billes expansibles. Il loge un poussoir de verrouillage dont une extrémité présente des portées susceptibles d'agir sur les billes.

Pour assurer la mise en place d'une roue, l'extrémité du poussoir est enfoncée contre l'effet d'un ressort de rappel en sorte que les portées n'agissent pas sur les billes. Les billes se trouvent alors logées à l'intérieur de l'axe creux. Cet axe est inséré dans le montant du châssis. Lorsque la roue est correctement mise en place, le poussoir est relâché et se translate à l'intérieur de l'axe sous l'effet du ressort. Les portées du poussoir agissent alors sur les billes de manière telle qu'elles soient en partie extraites de l'axe pour venir se plaquer à l'extérieur du montant contre le bord de celui-ci. L'axe est alors maintenu en position et la roue solidarisée au châssis.

Pour désolidariser la roue du châssis, le poussoir est enfoncé contre l'effet du ressort de rappel. Les portées du poussoir n'agissent plus sur les billes en sorte qu'elles viennent se dissimuler à l'intérieur de l'axe. L'axe est alors extrait du montant du châssis et la roue en est ainsi désolidarisée.

### 3. Inconvénients de l'art antérieur

Cette technique permet d'assurer une solidarisation et une désolidarisation d'une roue à un châssis de manière rapide sans nécessiter le moindre outil. Celle-ci présente toutefois l'inconvénient d'être complexe de conception et donc couteuse.

En outre, on observe que le diamètre et la longueur des logements, encore appelés canons, destinés à recevoir l'axe des roues varient d'un fauteuil roulant à l'autre. De même, le diamètre et la longueur des axes de roues peuvent varier d'une roue à l'autre. Le remplacement d'une roue par une autre lors d'une opération de maintenance peut donc s'avérer être assez complexe dans la mesure où il suppose de s'assurer préalablement que les dimensions (longueur et diamètre) de l'axe sont compatibles avec celles (diamètre et longueur) du canon.

### 4. Objectifs de l'invention

L'invention a notamment pour objectif de pallier ces inconvénients de l'art antérieur.

Un objectif de l'invention est du procurer une technique de solidarisation d'une roue à un châssis qui soit simple à tout le moins d'avantage que les techniques de l'art antérieur.

Plus précisément, un objectif de l'invention est de fournir, dans au moins un mode de réalisation, une technique universelle de solidarisation d'une roue à un châssis.

Plus particulièrement, l'invention vise à procurer une telle technique qui permette, dans au moins un mode de réalisation, de solidariser une roue à n'importe quel châssis, ou à tout le moins à un grand nombre d'entre eux, quelles que soient les dimensions (longueur, périmètre du contour intérieur comme le diamètre) de leur canon.

Un autre objectif de l'invention est de mettre en oeuvre une telle technique qui permette, dans au moins un mode de réalisation, d'adapter la longueur de l'axe d'une roue à celle du canon à l'intérieur duquel il est destiné à être logé.

Un autre objectif de l'invention est de mettre en oeuvre une telle technique qui permette, dans au moins un mode de réalisation, d'adapter le diamètre de l'axe d'une roue à celui du canon à l'intérieur duquel il est destiné à être logé.

L'invention a encore pour objectif de procurer une telle technique qui soit, dans au moins un mode de réalisation, simple de conception et/ou simple d'utilisation et/ou rapide à mettre en oeuvre et/ou robuste.

### 5. Exposé de l'invention

Ces objectifs, ainsi que d'autres qui apparaîtront par la suite, sont atteints à l'aide d'un dispositif de solidarisation à un châssis, notamment de fauteuil roulant, d'une roue amovible comprenant un moyeu mobile en rotation autour d'un axe, ledit châssis comprenant un logement à l'intérieur duquel au moins une partie dudit axe est destinée à être logée.

Selon l'invention, un tel dispositif comprend des moyens de modification du périmètre du contour extérieur dudit axe.

Plus précisément, l'invention concerne un dispositif de solidarisation à des châssis différents, notamment de fauteuil roulant, d'une roue amovible comprenant un moyeu mobile en rotation autour d'un axe, lesdits châssis comprenant un logement à l'intérieur duquel au moins une partie dudit axe est destinée à être logée, le périmètre intérieur desdits logements desdits châssis étant différents, et comprenant des moyens de modification du périmètre du contour extérieur dudit axe pour l'adapter au contour intérieur dudit logement.

Ainsi, l'invention repose sur une approche tout à fait originale qui consiste à pourvoir, un dispositif de solidarisation d'une roue à un châssis, de moyens permettant de modifier le périmètre du contour extérieur de l'axe de cette roue notamment lorsque celui-ci est inséré à l'intérieur du logement du châssis prévu pour accueillir une partie de l'axe.

La solidarisation de la roue au châssis est ainsi obtenue, selon l'invention, en augmentant le périmètre du contour extérieur de l'axe, par exemple son diamètre lorsque l'axe a une section circulaire, de manière telle qu'elle soit au moins égale au périmètre du contour intérieur du logement du châssis dans lequel cet axe est inséré. La désolidarisation est obtenue en diminuant au contraire le périmètre du contour extérieur de l'axe.

Ces moyens de modification permettant de régler la valeur du périmètre extérieur de l'axe de façon à l'ajuster à celle du périmètre intérieur du logement intérieur.

La technique selon l'invention permet ainsi de solidariser efficacement et simplement l'axe d'une roue à un châssis quelle que soit le périmètre intérieur du logement prévu sur celui-ci pour recevoir l'axe.

La technique selon l'invention permet ainsi de solidariser de manière universelle l'axe d'une roue à des châssis ayant des canons différents.

Selon une caractéristique préférentielle, un dispositif selon l'invention comprend des moyens d'actionnement desdits moyens de modification, lesdits moyens d'actionnement étant mobiles entre au moins :
- une position de déverrouillage dans laquelle le périmètre du contour extérieur dudit axe est inférieur au périmètre du contour intérieur dudit logement en sorte que ledit axe peut être inséré dans ledit logement en vue de rendre ladite roue solidaire dudit châssis ou extrait dudit logement en vue de désolidariser ladite roue dudit châssis, et
- une position de verrouillage dans laquelle le périmètre du contour extérieur dudit axe est au moins égale au périmètre du contour intérieur dudit logement en sorte que ledit axe est maintenu dans ledit logement et la roue est solidaire dudit châssis.

Il est ainsi possible de solidariser ou de désolidariser une roue du châssis en agissant simplement sur les moyens d'actionnement.

Selon une autre caractéristique préférentielle, un dispositif selon l'invention comprend des moyens de réglage de la valeur que présente le périmètre du contour extérieur dudit axe lorsque lesdits moyens d'actionnement se trouvent dans ladite position de verrouillage.

Il est ainsi possible d'ajuster la taille du périmètre extérieur de l'axe de manière à ce qu'elle corresponde à celle du périmètre intérieur du logement lorsque les moyens d'actionnement sont dans leur position de verrouillage.

Selon une autre caractéristique préférentielle, un dispositif selon l'invention comprend des moyens de réglage de la longueur dudit axe, lesdits moyens de réglage étant actionnables depuis l'extérieur dudit moyeu.

Il est ainsi possible de modifier la longueur de l'axe du dispositif pour l'adapter à celle du logement intérieur du châssis. Un dispositif selon l'invention permet donc de solidariser une roue à des châssis présentant des logements intérieurs de longueurs différentes.

Selon une autre caractéristique préférentielle, de l'invention ledit axe comprend une première et une deuxième portions d'axe, lesdites première et deuxième portions présentant à l'une de leurs extrémités un pan incliné, lesdits moyens d'actionnement agissant sur au moins une desdites portions d'axe pour :
- les rapprocher l'une de l'autre en sorte que lesdits pans inclinés glissent l'un contre l'autre pour augmenter le périmètre du contour extérieur dudit axe lorsque lesdits moyens d'actionnement passent de ladite position de déverrouillage à ladite position de verrouillage,
- les éloigner l'une de l'autre en sorte que lesdits pans inclinés glissent l'un contre l'autre pour diminuer le périmètre du contour extérieur dudit axe lorsque lesdits moyens d'actionnement passent de ladite position de verrouillage à ladite position de déverrouillage.

Cette solution technique fiable et robuste permet d'obtenir une augmentation ou une diminution du périmètre extérieur de l'axe de manière simple et efficace.

Selon une autre caractéristique préférentielle de l'invention, ledit axe comprend une première et une deuxième portions d'axe, ladite première portion d'axe comprenant au moins une extrémité creuse fendue et ladite deuxième portion d'axe comprenant un cône d'expansion, lesdits moyens d'actionnement agissant sur au moins une desdites portions d'axe pour :
- les rapprocher l'une de l'autre en sorte que ledit cône d'expansion se loge à l'intérieur de ladite extrémité creuse fendue pour augmenter le périmètre du contour extérieur dudit axe lorsque lesdits moyens d'actionnement passent de ladite position de déverrouillage à ladite position de verrouillage,
- les éloigner l'une de l'autre en sorte que ledit cône d'expansion tende à s'extraire de ladite extrémité creuse fendue pour diminuer le périmètre du contour extérieur dudit axe lorsque lesdits moyens d'actionnement passent de ladite position de verrouillage à ladite position de déverrouillage.

Cette solution technique également fiable et robuste offre une alternative à la solution précédente, qui permet aussi d'obtenir une augmentation ou une diminution du périmètre extérieure de l'axe de manière simple et efficace.

Selon une autre caractéristique préférentielle de l'invention, lesdits moyens d'actionnement comprennent une tige montée mobile en translation à l'intérieur de ladite première portion d'axe et solidaire de ladite deuxième portion d'axe, et des moyens de manipulation mobiles entre au moins une position de blocage et une position de déblocage, lesdits moyens de manipulation exerçant sur ladite tige :
- un effort de traction lors de leur passage de ladite position de déblocage à ladite position de blocage, et
- un effort de répulsion lors de leur passage de ladite position de blocage à ladite position de déblocage.

Cette solution simple permet par un actionnement des moyens d'actionnement d'agir sur la deuxième portion d'axe pour augmenter ou réduire efficacement et rapidement de périmètre extérieur de celui-ci afin d'obtenir une solidarisation ou une désolidarisation de la roue.

Selon une autre caractéristique préférentielle de l'invention, ladite tige est solidarisée à ladite deuxième portion d'axe au moyen d'une liaison hélicoïdale.

Ceci permet de régler de manière simple le périmètre qu'aura l'axe en position de verrouillage pour rendre possible la solidarisation d'une roue à des châssis ayant des logements intérieurs de périmètres extérieur différents.

Selon une autre caractéristique préférentielle, un dispositif selon l'invention comprend des moyens de rappel élastique agissant sur lesdites première et deuxième portions d'axe pour les maintenir éloignées l'une de l'autre.

Ainsi, des les moyens d'actionnement sont déplacés de leur position de verrouillage à leur position de déverrouillage, les deux portions d'axe s'éloignent l'une de l'autre pour atteindre leur position dans laquelle le périmètre du contour extérieur de l'axe est inférieur au périmètre intérieur du logement intérieur du châssis. Ceci facilite la mise en place ou la désolidarisation de la roue.

Selon une autre caractéristique préférentielle de l'invention, lesdits moyens de manipulation comprennent une manette comprenant une came montée mobile en rotation autour d'un arbre s'étendant essentiellement orthogonalement à l'axe de ladite tige, ladite tige étant solidaire dudit arbre.

Cette mise en oeuvre permet de transmettre de manière simple, robuste, fiable et efficace un mouvement d'attraction l'une vers l'autre ou de répulsion l'une de l'autre des deux portions d'axe afin de solidariser ou de désolidariser la roue en entrainant en rotation la manette.

Selon une autre caractéristique préférentielle de l'invention, lesdits moyens de réglage de la longueur dudit axe comprennent une bague de réglage vissée sur une extrémité dudit axe à l'extérieur dudit moyeu.

Il est ainsi possible en vissant plus ou moins cette bague de modifier la longueur de l'axe sortant du moyeu destinée à être insérée dans le logement intérieur du châssis. Une roue peut ainsi être solidarisée à des châssis ayant des logements intérieurs de longueurs différentes.

L'invention concerne également un fauteuil roulant comprenant au moins un châssis et une roue amovible comprenant un moyeu mobile en rotation autour d'un axe, ledit châssis comprenant un logement à l'intérieur duquel au moins une partie dudit axe est destinée à être logée, caractérisé en ce qu'il comprend au moins un dispositif de solidarisation de ladite roue audit châssis selon l'une quelconque des variantes décrites ci-avant.

### 6. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 illustre une vue en coupe schématique d'un système de solidarisation selon l'invention en position de déverrouillage ;
- la figure 2 illustre une vue en coupe schématique du système de solidarisation illustré à la figure 1 en position de verrouillage ;
- la figure 3 illustre une vue schématique de l'interaction entre le moyeu et le canon.

### 7. Description d'un mode de réalisation de l'invention

### 7.1. Rappel du principe général de l'invention

Le principe général de l'invention repose sur la mise en oeuvre d'un dispositif de solidarisation d'une roue à un châssis comprenant des moyens permettant de modifier le périmètre du contour extérieur de l'axe de la roue destiné à être placé à l'intérieur du logement du châssis prévu pour accueillir en partie cet axe.

Ces moyens de modification permettent donc de régler la valeur du périmètre extérieur de l'axe pour l'adapter à celle du périmètre intérieur du logement prévu à cet effet dans le châssis.

Il est ainsi possible de solidariser une roue à un grand nombre de châssis quel que soit le périmètre du contour intérieur du logement du châssis prévu pour loger l'axe de la roue.

La technique selon l'invention offre ainsi une solution de solidarisation universelle en ce qu'elle permet de solidariser une même roue à des châssis dont les canons ont des dimensions différentes.

### 7.2. Exemple d'un mode de réalisation d'un dispositif de solidarisation selon l'invention

### 7.2.1. Architecture

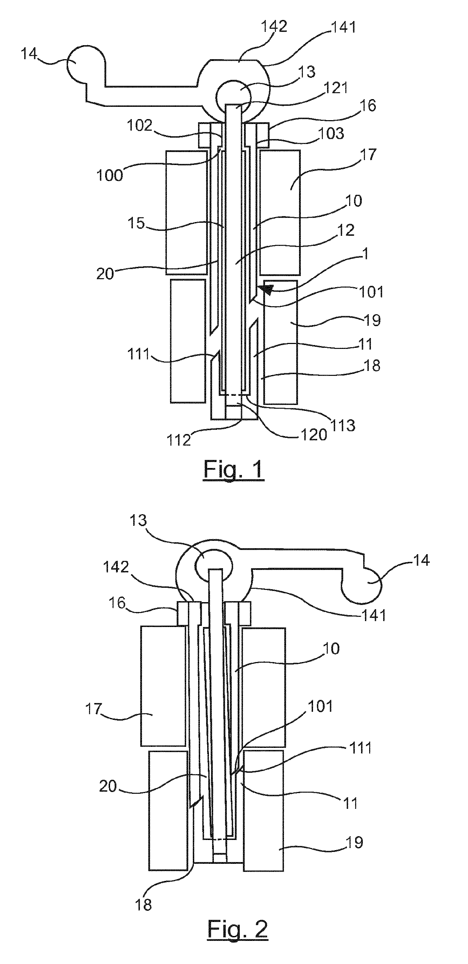

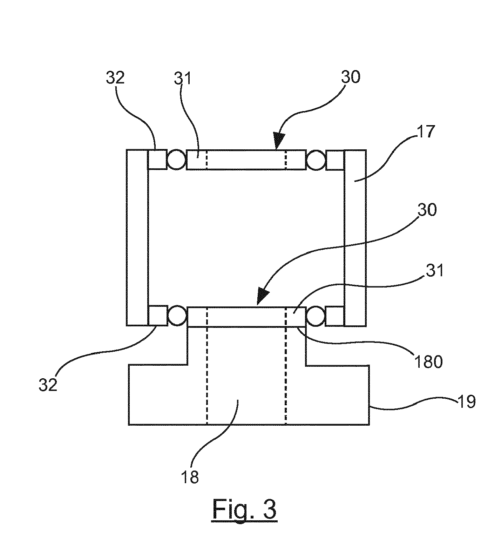

On présente, en relation avec les figures 1 à 3, un mode de réalisation d'un dispositif de solidarisation selon l'invention.

Ainsi que cela est représenté sur ces figures, un dispositif selon ce mode de réalisation comprend un axe 1 comprenant une première portion d'axe 10 et d'une deuxième portion d'axe 11. L'axe 1 présente ici une section circulaire.

Les première 10 et deuxième 11 portions d'axe comprennent chacune une extrémité présentant un pan incliné 101, 111.

La première portion d'axe 10 est creuse. Elle est traversée par un trou 102 ménagé le long de son axe longitudinal à son extrémité opposée à celle présentant le pan incliné 101.

La deuxième portion d'axe 11 est également en partie creuse. Elle est traversée par un taraudage 112 à son extrémité opposée à celle présentant le pan incliné 111.

Une tige 12 est logée à l'intérieur des première 10 et deuxième 11 portions d'axe.

L'extrémité distale 120 de la tige 12 est vissée dans le taraudage 112 de la deuxième portion d'axe 11. La tige 12 et la deuxième portion d'axe 11 sont donc liées par une liaison hélicoïdale.

L'extrémité proximale 121 de la tige 12 traverse de manière coulissante le trou 102 de la première portion d'axe 10 et s'étend en dehors de celle-ci. Cette extrémité proximale 121 est solidarisée à un arbre 13.

L'arbre 13 s'étend essentiellement orthogonalement à l'axe longitudinal de l'axe 1 et coupe celui-ci.

Les première 10 et deuxième 11 portions d'axe sont positionnées l'une par rapport à l'autre de telle sorte que leurs pans inclinés 101, 111 soient en regard l'un de l'autre.

Les première 10 et deuxième 11 portions d'axe comprennent chacune un épaulement interne 100, 113.

Un ressort de compression 15 est logé autour de la tige 12 dans le logement intérieur 20 définis par les première 10 et deuxième 11 portions d'axe entre les épaulements internes 100, 113. Ce ressort 15 tend à maintenir les première 10 et deuxième 11 portions d'axe éloignées l'une de l'autre.

Une mannette 14 est montée mobile en rotation autour de l'arbre 13. Cette manette 14 est traversée par une lumière (non représentée) au travers de laquelle passe la tige 12. Cette mannette 14 comprend une came 141. Cette came 141 présente un contour essentiellement cylindrique avec un méplat 142. Le contour extérieur de la came 141 vient en appui contre le bord extérieur de l'extrémité de la première portion 10 d'axe qui ne présente pas de pan incliné 101. La came 141 forme un excentrique.

Le contour extérieur de l'extrémité de la première portion 10 d'axe qui ne présente pas de pan incliné 101 présente une portion filetée 103.

Une bague de réglage, comprenant ici un écrou 16, est vissée sur cette portion filetée 103.

L'axe 1 constitue l'axe d'une roue (non représentée). Cette roue comprend classiquement un moyeu 17 monté mobile en rotation autour de l'axe 1. Par souci de simplification, ce moyeu 17 est représenté de manière très schématique sur les figures 1 et 2. Il est préférentiellement relié à la jante de la roue au moyen de rayons ou de bâtons. Il est relié à l'axe 1 par une liaison pivot. Pour cela, une paire de roulements à billes 30 est par exemple interposée entre l'axe 1 et l'intérieur du moyeu 17. Les cages intérieures 31 de ces roulements à billes sont préférentiellement montées glissantes sur l'axe 1. Les cages extérieures 32 sont préférentiellement emmanchées à force dans le moyeu 17.

Comme il sera expliqué plus en détail par la suite, une portion de l'axe 1 est destinée à être inséré dans un logement 18 prévu à cet effet sur un châssis 19 afin de rendre solidaire la roue de ce châssis 19. Le logement 18 pourra être ménagé directement dans le châssis ou bien dans un canon solidaire du châssis. Ce logement 18 présente une forme complémentaire de celle de l'axe 1. Il présente donc dans ce mode de réalisation une section circulaire. Le châssis 19 est ici celui d'au fauteuil roulant.

La mannette 14 est mobile entre une position de blocage (illustrée à la figure 2) et une position de déblocage (illustrée à la figure 1). Du fait de la mise en oeuvre de la came 141 formant un excentrique, la manette exerce sur la tige 12 :
- un effort de traction lors de son passage de sa position de déblocage à sa position de blocage, et
- un effort de répulsion lors de son passage de sa position de blocage à sa position de déblocage.

La manette 14 agit ainsi par l'intermédiaire de la tige 12 sur au moins une des première 10 et deuxième 11 portion d'axe, en l'occurrence ici sur la deuxième portion d'axe 11, pour :
- les rapprocher l'une de l'autre en sorte que les pans inclinés 101, 111 glissent l'un contre l'autre pour augmenter le périmètre du contour extérieur de l'axe 1, en l'occurrence son diamètre, lorsque la mannette 14 passe de sa position de déverrouillage à sa position de verrouillage,
- les éloigner l'une de l'autre en sorte que les pans inclinés 101, 111 glissent l'un contre l'autre pour diminuer le périmètre du contour extérieur de l'axe 1, en l'occurrence son diamètre, lorsque la mannette 14 passe de sa position de verrouillage à sa position de déverrouillage.

La tige 12, à l'extrémité distale 120 de laquelle la deuxième portion d'axe 11 est solidarisée, est donc mobile entre au moins :
- une position de déverrouillage dans laquelle le périmètre du contour extérieur de l'axe 1, en l'occurrence son diamètre, est inférieure au périmètre du contour intérieur du logement 18, en l'occurrence son diamètre, en sorte que l'axe 1 peut être inséré dans le logement 18 en vue de rendre la roue solidaire du châssis 19 ou extrait du logement 18 en vue de désolidariser la roue du châssis 19, et
- une position de verrouillage dans laquelle le périmètre du contour extérieur de l'axe 1, en l'occurrence son diamètre, est au moins égale au périmètre du contour intérieur du logement 18, en l'occurrence son diamètre, en sorte que l'axe 1 est maintenu dans le logement 18 et la roue est solidaire du châssis 19.

### 7.2.2. Fonctionnement

La mise en oeuvre du dispositif selon l'invention va à présent être décrite tant dans le cadre de la solidarisation d'une roue à un châssis de fauteuil roulant que dans celui de la désolidarisation de la roue du châssis.

### A/ Solidarisation

La solidarisation d'une roue au châssis est obtenue de la manière suivante.

La manette 14 est placée dans sa position de déblocage, illustrée à la figure 1. La tige 12, à l'extrémité distale 120 de laquelle la deuxième portion d'axe 11 est solidarisée, se trouve alors dans sa position de déverrouillage. Les première 10 et deuxième 11 portions d'axe se trouvent alors être éloignées l'une de l'autre en sorte que le diamètre de l'axe 1 est inférieur à celui du logement 18, encore appelé canon, prévu dans le châssis 19.

La partie de l'axe 1 s'étendant en dehors du moyeu 17 est insérée à l'intérieur du logement 18. Cette partie de l'axe 1 comprend la deuxième portion d'axe 11 ainsi qu'une partie de la première portion d'axe 10 présentant le pan incliné 101. La cage intérieure 31 du roulement à billes 30 du moyeu 17 placé du côté du châssis 18 est placée en butée contre le bord du châssis qui pourra comprendre un épaulement 180 prévu à cet effet. La cage intérieure 31 de l'autre roulement à billes 30 se trouve en butée contre la bague de réglage 16. Dans une variante, la bague de réglage pourra ne pas être mise en oeuvre. Dans ce cas, l'axe comprendra préférentiellement un épaulement à la place de celle-ci, contre lequel la bague intérieure de ce roulement à billes viendra en butée.

La manette 14 est ensuite déplacée manuellement depuis sa position de déblocage dans sa position de blocage illustrée à la figure 2.

Au cours de ce déplacement, la came 141 glisse contre l'extrémité de la première portion d'axe 10, la tige 12 passe de sa position déverrouillage à sa position de verrouillage, si bien que les première 10 et deuxième 11 portions d'axe se rapprochent l'une de l'autre. Leur pans inclinés 101, 111 glissent l'un contre l'autre en sorte que le diamètre de l'axe 1 tend à augmenter.

Lorsque la mannette 14 se trouve dans sa position de blocage, le méplat 142 de la came 141 se trouve contre l'extrémité de la première portion d'axe 10. La tige 12, et la deuxième portion d'axe 11 qui en est solidaire, se trouvent alors dans leur position de verrouillage dans laquelle le diamètre de l'axe 11 est au moins égal à celui du logement 18.

L'axe 1 est alors maintenu dans le logement 18 et la roue est solidaire du châssis 19.

### B/ Désolidarisation

La désolidarisation d'une roue du châssis est obtenue de la manière suivante.

La manette 14 est initialement positionnée dans sa position de blocage, illustrée à la figure 2. La tige 12, et la deuxième portion d'axe 11 qui en est solidaire, se trouvent dans leur position de verrouillage. Les première 10 et deuxième 11 portions d'axe se trouvent être rapprochées l'une de l'autre en sorte que le diamètre de l'axe 1 est au moins égal à celui du logement 18 prévu dans le châssis 19.

La manette 14 est déplacée manuellement depuis sa position de blocage dans sa position de déblocage illustrée à la figure 1.

Au cours de ce déplacement, la came 141 glisse contre l'extrémité de la première portion d'axe 10, la tige 12 passe de sa position verrouillage à sa position de déverrouillage. Les première 10 et deuxième 11 portions d'axe s'éloignent l'une de l'autre. Leur pans inclinés 101, 111 glissent l'un contre l'autre en sorte que le diamètre de l'axe 1 tend à diminuer.

Lorsque la mannette 14 se trouve dans sa position de déblocage, la tige 12, et la deuxième portion d'axe 11 qui en est solidaire, se trouvent dans leur position de déverrouillage dans laquelle le diamètre de l'axe 1 est inférieur à celui du logement 18.

L'axe 1 peut alors être extrait du logement 18 afin de désolidariser la roue du châssis 19.

### C/ Variante

Dans une variante, la came 141 pourra comprendre plusieurs méplats 142 juxtaposés. Chaque position de la manette 14 dans laquelle un des méplats 142 est placé contre l'extrémité de la première portion d'axe 10 correspondra alors à un diamètre d'axe différent. Il y aura dans ce cas plusieurs positions de verrouillage et de blocage.

Dans une autre variante, la manette 14 pourrait ne pas comprendre de came ni de méplat et ne pas être montée mobile en rotation autour de l'arbre 13, mais être rendue solidaire de la tige 12 par un encastrement par exemple. Une rotation de la manette autour de l'axe de la tige 12 permettrait alors de visser ou dévisser celle-ci dans la deuxième portion d'axe 11 afin d'ajuster le diamètre de l'axe à celui du logement intérieur et d'assurer la solidarisation de la roue ou sa désolidarisation.

Le mode de réalisation présentement décrit ainsi que ses variantes pourraient être modifié notamment en remplaçant les deux portions d'axe à pan incliné par une portion d'axe fendue et un cône d'expansion.

### C/ Réglage

### C.1/ Diamètre de l'axe

Dans la position de déverrouillage, les première 10 et deuxième 1 portions d'axe pourront être plus ou moins rapprochées l'une de l'autre en vissant plus ou moins la deuxième portion d'axe 11 sur la tige 12. Ceci permet d'ajuster la valeur que prendra le périmètre extérieur, en l'occurrence le diamètre, de l'axe 1 en position de verrouillage. Il est ainsi possible d'utiliser le dispositif selon l'invention pour solidariser une même roue sur des châssis différents ayant des canons de diamètres intérieurs différents.

Ceci permet également, dans une faible mesure, de modifier légèrement la longueur de l'axe.

### C.2/ Longueur de l'axe

La longueur du canon 18 peut également varier d'un châssis à l'autre. De manière à pouvoir solidariser une même roue à des châssis ayant des canons de longueur différente, le dispositif selon l'invention permet de régler la longueur de l'axe 1. Pour cela, il suffit de visser plus ou moins l'écrou 16 sur la portion filetée 103 de la première portion d'axe 10 pour augmenter ou diminuer la longueur de l'axe 1 et en particulier de sa portion s'étendant en dehors du moyeu 17 et destinée à être insérée dans le canon.

### 7.2.3. Avantages

L'invention procure un dispositif universel de solidarisation d'une roue à un châssis dans la mesure où il permet de solidariser une même roue à des châssis ayant des canons différents en offrant la possibilité de modifier le périmètre du contour extérieur de l'axe et/ou la longueur de l'axe pour l'adapter aux dimensions de chaque canon.

Un dispositif selon l'invention peut être mis en oeuvre en première monte sur des roues neuves. Il peut également être mis en oeuvre en deuxième monte pour réhabiliter des roues existantes afin qu'elles puissent être solidarisées à des châssis ayant des canons différents.

## Revendications

1. Dispositif de solidarisation à des châssis (19) différents, notamment de fauteuil roulant, d'une roue amovible comprenant un moyeu (17) mobile en rotation autour d'un axe (1), lesdits châssis (19) comprenant un logement (18) à l'intérieur duquel au moins une partie dudit axe (1) est destinée à être logée, le périmètre intérieur desdits logements desdits châssis (19) étant différents, **caractérisé en ce qu'**il comprend des moyens de modification (10, 11, 101, 111) du périmètre du contour extérieur dudit axe (1) pour l'adapter au contour intérieur dudit logement (18).

2. Dispositif selon la revendication 1, **caractérisé en ce qu'**il comprend des moyens d'actionnement (12) mobiles entre au moins :
- une position de déverrouillage dans laquelle le périmètre du contour extérieur dudit axe (1) est inférieure au périmètre du contour intérieur dudit logement (18) en sorte que ledit axe (1) peut être inséré dans ledit logement (18) en vue de rendre ladite roue solidaire dudit châssis (19) ou extrait dudit logement (18) en vue de désolidariser ladite roue dudit châssis (19), et
- une position de verrouillage dans laquelle le périmètre du contour extérieur dudit axe (1) est au moins égale au périmètre du contour intérieur dudit logement (18) en sorte que ledit axe (1) est maintenu dans ledit logement (18) et la roue est solidaire dudit châssis (19).

3. Dispositif selon la revendication 2, **caractérisé en ce qu'**il comprend des moyens de réglage de la valeur que présente le périmètre du contour extérieur dudit axe (1) lorsque lesdits moyens d'actionnement se trouvent dans ladite position de verrouillage.

4. Dispositif selon l'une quelconque des revendications 1 à 3, **caractérisé en ce qu'**il comprend des moyens de réglage (16, 103) de la longueur dudit axe (1), lesdits moyens de réglage étant actionnables depuis l'extérieur dudit moyeu (17).

5. Dispositif selon l'une quelconque des revendications 2 à 4, **caractérisé en ce que** ledit axe (1) comprend une première (10) et une deuxième (11) portions d'axe, lesdites première (10) et deuxième (11) portions présentant à l'une de leurs extrémités un pan incliné (101, 111), lesdits moyens d'actionnement (12) agissant sur au moins une desdites portions d'axe (10, 11) pour :
- les rapprocher l'une de l'autre en sorte que lesdits pans inclinés (101, 111) glissent l'un contre l'autre pour augmenter le périmètre du contour extérieur dudit axe (1) lorsque lesdits moyens d'actionnement (12) passent de ladite position de déverrouillage à ladite position de verrouillage,
- les éloigner l'une de l'autre en sorte que lesdits pans inclinés (101, 111) glissent l'un contre l'autre pour diminuer le périmètre du contour extérieur dudit axe (1) lorsque lesdits moyens d'actionnement (12) passent de ladite position de verrouillage à ladite position de déverrouillage.

6. Dispositif selon l'une quelconque des revendicatio 2 à 4, **caractérisé en ce que** ledit axe (1) comprend une première (10) et une deuxième (11) portions d'axe, ladite première portion d'axe (10) comprenant au moins une extrémité creuse fendue et ladite deuxième portion d'axe (11) comprenant un cône d'expansion, lesdits moyens d'actionnement (12) agissant sur au moins une desdites portions d'axe (10, 11) pour :
- les rapprocher l'une de l'autre en sorte que ledit cône d'expansion se loge à l'intérieur de ladite extrémité creuse fendue pour augmenter le périmètre du contour extérieur dudit axe (1) lorsque lesdits moyens d'actionnement (12) passent de ladite position de déverrouillage à ladite position de verrouillage,
- les éloigner l'une de l'autre en sorte que ledit cône d'expansion soit extrait de ladite extrémité creuse fendue pour diminuer le périmètre du contour extérieur dudit axe (1) lorsque lesdits moyens d'actionnement (12) passent de ladite position de verrouillage à ladite position de déverrouillage.

7. Dispositif selon la revendication 5 ou 6, **caractérisé en ce que** lesdits moyens d'actionnement comprennent une tige (12) montée mobile en translation à l'intérieur de ladite première portion d'axe (10) et solidaire de ladite deuxième portion d'axe (11), et des moyens de manipulation (14) mobiles entre au moins une position de blocage et une position de déblocage, lesdits moyens de manipulation (14) exerçant sur ladite tige (12) :
- un effort de traction lors de leur passage de ladite position de déblocage à ladite position de blocage, et
- un effort de répulsion lors de leur passage de ladite position de blocage à ladite position de déblocage.

8. Dispositif selon la revendication 7, **caractérisé en ce que** ladite tige (12) est solidarisée à ladite deuxième portion d'axe (10) au moyen d'une liaison hélicoïdale.

9. Dispositif selon l'une quelconque des revendications 5 à 8, **caractérisé en ce qu'**il comprend des moyens de rappel élastique (15) agissant sur lesdites première (10) et deuxième (11) portions d'axe pour les maintenir éloignées l'une de l'autre.

10. Dispositif selon l'une quelconque des revendications 7 à 9, **caractérisé en ce que** lesdits moyens de manipulation comprennent une manette (14) comprenant une came (141) montée mobile en rotation autour d'un arbre (13) s'étendant essentiellement orthogonalement à l'axe de ladite tige (12à), ladite tige (12) étant solidaire dudit arbre (13).

11. Dispositif selon l'une quelconque des revendications 2 à 10, **caractérisé en ce que** lesdits moyens de réglage de la longueur dudit axe (1) comprennent une bague de réglage (16) vissée sur une extrémité dudit axe (1) à l'extérieur dudit moyeu (17).

12. Fauteuil roulant comprenant au moins un châssis (19) et une roue amovible comprenant un moyeu (17) mobile en rotation autour d'un axe (1), ledit châssis (19) comprenant un logement (178) à l'intérieur duquel au moins une partie dudit axe (1) est destinée à être logée, **caractérisé en ce qu'**il comprend au moins un dispositif de solidarisation de ladite roue audit châssis selon l'une quelconque des revendications 1 à 11.
